# EUROPEAN PATENT APPLICATION

(11) **EP 4 339 566 A1**
(43) Date of publication of application: **20.03.2024**
(21) Application number: 22195984.4
(22) Date of filing: 15.09.2022
(51) Int. Cl.: G01H 9/00, G02B 6/02

(54) **AN OPTICAL FIBER DEVICE FOR PHOTO-ACOUSTIC TRANSMISSION**

(71) Applicant: Nederlandse Organisatie voor toegepast-natuurwetenschappelijk Onderzoek TNO, 2595 DA 's-Gravenhage (NL)
(72) Inventor: CHENG, Lun Kai, 2595 DA 's-Gravenhage (NL); DE JONG, Willem, 2595 DA 's-Gravenhage (NL); PIRAS, Daniele, 2595 DA 's-Gravenhage (NL); QUESSON, Benoît André Jacques, 2595 DA 's-Gravenhage (NL); VAN NEER, Paul Louis Maria Joseph, 2595 DA 's-Gravenhage (NL); ODERWALD, Michiel Peter, 2595 DA 's-Gravenhage (NL)
(74) Representative: V.O.

(57) **Abstract**

An optical fiber device has a fiber core, a cladding layer around the fiber core and a plurality of tilted fiber Bragg gratings, FBGs, in the fiber core at a sequence of positions along the optical axis of the fiber core. The tilted FBGs are configured to reflect and transmit respective non zero fractions of the optical power of light with a predetermined optical reflection wavelength defined by the tilted FBG from the fiber core at the position of the tilted FBG. The tilted FBGs having a tilt angle in an angle range wherein the tilted FBG reflects light from the fiber core perpendicularly to the fiber core or with a deviation from perpendicular reflection at which the reflected light does not give rise to cladding mode generation at the predetermined optical reflection wavelength of the tilted FBG. Photo-acoustic conversion material is provided on the cladding layer at least in areas where light reflected by the tilted FBGs at said positions emerges from the cladding layer, the cladding layer extending continuously at said areas.

## Description

### Field of the invention

The invention relates to an optical fiber device that is configured to emit photo-acoustically generated acoustic signals.

### Background

WO2021145767 (applicant's reference P125022PC00) discloses an optical device wherein ultrasound emission is generated by guiding light through an optical waveguide on a substrate, wherein the final part of the waveguide contains photo-acoustic conversion material in direct contact with the waveguide where the optical energy is transported. In other embodiments light is coupled from an optical waveguide on the substrate into a larger body of photo-acoustic material on the substrate. In yet other embodiments diffracted light is directed from an optical waveguide to a photo-acoustic conversion body. An array of such ultrasound emitters is realized by coupling fractions of the light from a main waveguide to a spatial array of auxiliary waveguides from each of which light is used for photo-acoustic conversion.

It is desirable to provide ultrasound emission also with light from an optical fiber rather than an optical waveguide. However, use of an arrangement of optical fibers is more complicated than optical waveguides on a substrate.

CN113348598 discloses a fiber laser device wherein stimulated Raman scattering is removed from an optical fiber (as is known per se, Raman scattering produces light at a wavelength that differs from the original laser wavelength). The fiber laser device comprises a core fiber and two layers of cladding. A tilted FBG in the core is used to remove light at a selected stimulated scattering wavelength from the core while the laser wavelength is unaffected. However, for high laser powers the outer cladding layer is susceptible to damage due to heating by light that has been deflected by the FBG. To keep the deflected light from entering the outer cladding layer, the outer cladding layer around a section of the inner cladding is replaced by a high refractive index material that refracts light that would otherwise reach the outer cladding layer, and a light absorbing member with high damage threshold is located on this high refractive index material. Thus, light that would otherwise reach the outer cladding layer is redirected to the light absorbing member by the high refractive index material.

Using cladding modes captured in the cladding has the disadvantage that the cladding mode optical power is very sensitive to the shape of the part of the optical fiber between the tilted FBG and the photo-acoustic material due to difference in bending loss and mode mixing between the different cladding modes, and results in uncertainty in the strength of the ultrasound signal. Secondly, in order to tap the optical power of the cladding modes from the cladding, the refractive index of the photo-acoustic material needs to be higher than that of the cladding or the cladding must be removed locally and filled by the photo-acoustic material to enable interaction with the cladding mode. The latter substantially reduces the integrity and robustness of the optical fiber.

### Summary

Among others it is an object to provide for an optical fiber device that uses light from the core of an optical fiber to produce acoustic emission at selected plurality of spatial locations.

An optical fiber device according to claim 1 is provided. Herein a fiber core with tilted FBGs is used that have a tilt angle at which the tilted FBG reflects light from the fiber core perpendicularly (radially) to the axial direction of the fiber core or with a deviation from perpendicular reflection that does not give rise to cladding mode generation (e.g. in an angle range of 70-110 or 50-130 degrees of the direction of the reflected light relative to the axial direction of the fiber core). Preferably, the fiber core is a single mode fiber core. Photo-acoustic conversion material on the cladding layer is used to convert the light that emerges from the cladding layer into emitted acoustic emission, such as ultrasound emission e.g. with frequencies above 100 kHz. Thus, problems due to cladding modes are avoided. For example, coupling from and to cladding modes will not affect the relative intensity of the acoustic emission from the layer of photo-acoustic conversion material and/or bodies at different positions along the optical fiber. No inconsistent optical power reaches the photo-acoustic conversion material due to cladding modes. As the reflected light propagates through the cladding directly to the photo-acoustic conversion material, no modification or removing of the cladding locally is required. A plurality of tilted FBGs is used in series in the fiber core, which each reflect and transmit non zero fractions of light from the fiber core. Thus acoustic emission can be produced simultaneously from the photo-acoustic conversion material due to light from all tilted FBGs at discrete positions without problems due to cladding modes.

The photo-acoustic conversion material on the cladding layer may have the form of discrete bodies of photo-acoustic conversion material located where light reflected by the tilted FBGs at said positions emerges from the cladding layer, or a continuous layer of photo-acoustic conversion material surrounding the cladding layer, or a volume of photo-acoustic conversion material wherein the optical fiber is embedded.

The reflection ratios of the fractions of the tilted FBGs in the plurality are configured to increase with position of the tilted FBG along the sequence. In this way a drop-off in reflected intensity can be reduced. This may have the effect to improve signal to noise ratio in measurements using the acoustic emission. Preferably, the reflection ratios of the fractions of the tilted FBGs are configured so that the optical power of the light that is reflected from the tilted FBGs in the plurality is independent of their position in the sequence.

In an embodiment the tilted FBGs in the plurality of tilted FBGs all define the same predetermined optical reflection wavelength. Thus transmission of an optical pulse at a single optical wavelength through the fiber core will suffice to emit nearly simultaneous acoustic pulses.

In an embodiment (sub-)sequences of tilted FBGs for reflection of light at different optical wavelengths are used in the fiber core. Thus, light pulses at different optical wavelength can be used to cause acoustic emission. This increases the number of emitters along the same optical fiber that can be used in the device for a given signal to noise ratio. Successive positions in the sequence of positions of all tilted FBG may alternatingly be part of subsequences associated with different optical wavelengths. Thus, controllable directionality effects on the acoustic emission can be achieved and/or the distance between positions where acoustic emission is generated simultaneously can be increased. In another embodiment, the subsequences are groups of successive positions from the sequence. Thus, the locally emitted acoustic power can be increased. Because coupling to and from cladding modes is avoided, it is possible to prevent generation of acoustic emission at positions associated with one optical wavelength due to light with the other optical wavelengths that would travel as a cladding mode between positions from different groups.

In an embodiment each tilted FBG in the plurality of tilted FBGs defines a respective different predetermined optical reflection wavelength. Thus acoustic emission from different single positions can be controlled by using light pulses at different optical wavelengths.

In an embodiment, the tilted FBGs of the plurality comprises tilted FBGs that are directed to reflect the fraction of light in different circumferential directions from the fiber core. Thus e.g. the directional variation of the emitted energy can be reduced by simultaneous emission using differently directed reflected light or, on the contrary, increased by selective emission. The bodies of photo-acoustic conversion material that receive light reflected in different directions from the tilted FBGs may lie in correspondingly different circumferential angle ranges. The same different circumferential directions may be used repeatedly along the fiber.

The optical fiber device may use a single core fiber for emission into a surrounding medium. In addition to the tilted FBGs, not-tilted FBGs may be included in the fiber core for use to sense acoustic waves from a surrounding medium. In another embodiment a multi-core fiber may be used. This may be used to place not-tilted FBGs for sensing in a further fiber core and/or the further fiber core may comprise further tilted FBGs, to increase the acoustic emission power.

### Brief description of the drawings

These and other objects and advantageous aspects will become apparent from a description of exemplary embodiments with reference to the following figures.
Figure 1 shows a length-direction cross section of an optical fiber device;
Figure 2a shows bodies of photo-acoustic conversion material in alternating directions;
Figure 2b shows an optical fiber device for using a plurality of optical wavelengths;
Figure 3 shows an optical fiber device with sensing FBGs;
Figure 4 shows an optical fiber device with a plurality of fiber cores.

### Detailed description of exemplary embodiments

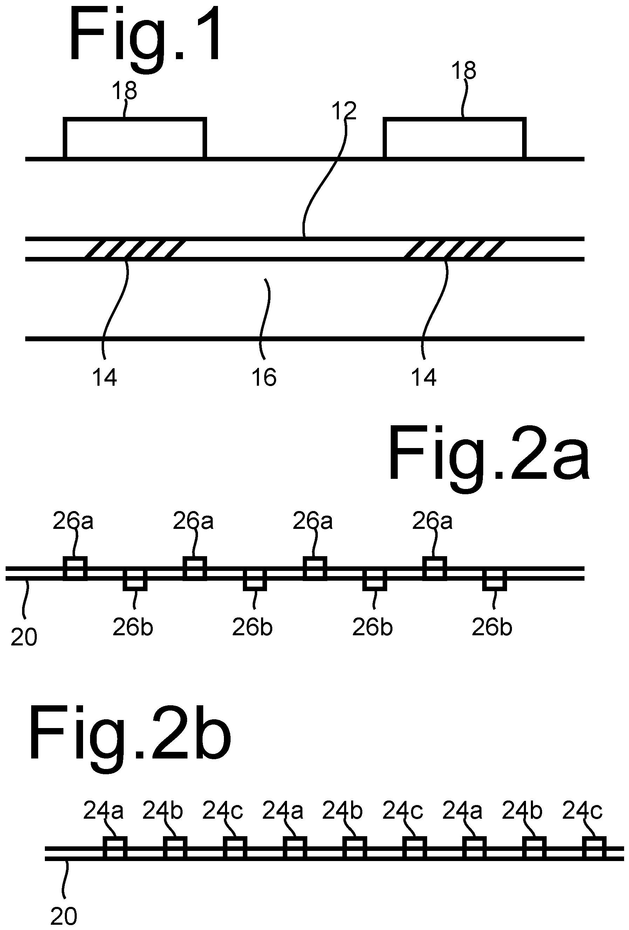

Figure 1 shows a length-direction cross section of an embodiment of an optical fiber device comprising a single mode fiber core 12, with a plurality of tilted FBGs 14 (tilted Fiber Bragg Gratings) in fiber core 12 at a sequence of positions along the length of fiber core 12, a cladding layer 16 around fiber core 12 and photo-acoustic conversion material 18 on surface areas of cladding layer 16 at the positions of tilted FBGs 14. Figure 1 is not to scale: in an optical fiber with a single mode fiber core, the thickness of the cladding layer is usually much larger than that of the single mode fiber core. Each tilted FBG 14 is configured to provide for reflection of a fraction of the light at a predetermined optical wavelength from fiber core 12 in a direction perpendicular to (radial relative to) the optical axis of fiber core 12. Thus, the optical power, Pr, of light reflected by each tilted FGB 14 is a fraction fac*P of the optical power P of the light that enters the tilted FBG 14 in fiber core 12 and fac is the reflection ratio of the fraction of reflection (in shorthand, the term fraction will also be used to this ratio). Cladding layer 16 extends continuously at the surface areas of where reflected light from tilted FBGs 14 emerges from cladding layer 16, i.e. its thickness at the surface areas is the same as elsewhere. Although cladding layer 16 is shown as a single layer, it should be noted that this cladding layer may consist of a single layer or of different sub-layers.

Photo-acoustic conversion material 18 is located to receive the perpendicularly reflected light from the tilted FBGs 14 through cladding layer 16 and to absorb that light. Photo-acoustic conversion materials are known per se. They may be realized for example by including optical absorber particles (e.g. ink particles) in a transparent material. As illustrated in figure 1, photo-acoustic conversion material 18 may be provided in the form of a plurality of discrete bodies at the surface areas of cladding layer 16 where light from tilted FBGs 14 emerges. Alternatively, photo-acoustic conversion material 18 may have the form of a layer of photo-acoustic conversion material on cladding layer 16 that extends to over a plurality of such surface of such areas. Thus, regions in the layer of photo-acoustic conversion material that receive the reflected light will act as a plurality of integrated bodies.

In a further embodiment a combination may be used of a layer of photo-acoustic conversion material, or sections with such layers, and bodies of photo-acoustic material at positions where the layer(s) of photo-acoustic material is (are) absent.

The layer of photo-acoustic conversion material may be a thin layer, of a thickness no longer than needed to absorb a major part of the reflected light (e.g. at least half of the optical power of the reflected light). But the layer of photo-acoustic conversion material may be part of a much thicker volume, of which only a part near cladding layer 16 need have photo-acoustic conversion properties. Thus, most of the volume serves as a medium through which acoustic waves propagate after they have been generated near the cladding. In an embodiment, the medium may be a volume of photo-acoustic conversion material that forms a solid structure or is part of such a solid structure, and in which the optical fiber formed by the fiber core and its cladding is directly embedded.

By way of example two emitter arrangements, each formed by a combination of a tilted FBG 14 in fiber core 12 and a body of photo-acoustic material 18 at the position of the tilted FBGs 14 are shown, but preferably a greater number of such emitter arrangements is present. In addition, a body of photo-acoustic material without a corresponding tilted FGB may be present at the tip of fiber core 12. The predetermined optical wavelength may be the same for all tilted FBGs 14, but other FBGs (not shown) that reflect at other predetermined optical wavelengths may be present in fiber core 12 as well.

Tilted FBGs are known per se. The index of refraction of the material of single mode fiber core 12 at the position of each tilted FBG 14 exhibits a fixed three-dimensional spatial modulation pattern with a position dependent gradient. The angle between the optical axis of fiber core 12 and the gradient direction of the index of refraction at the optical axis of fiber core 12 will be referred to as the tilt angle of the tilted FBG. The gradient size and sign may vary periodically with position along the fiber core, with the period length defining the predetermined optical wavelength at which tilted FBG reflects light. The reflection ratio of the fraction of the intensity of the light that is reflected by a tilted FBG 14 and the transmission ratio of the fraction of the optical power of the light that is transmitted at the predetermined optical wavelength are determined by the modulation depth and/or the length of the modulation pattern along the optical axis of fiber core 12. The fiber core is preferably passive, with no optical amplifier sections in the fiber core.

The tilt angle results in reflection of light in a direction with twice the tilt angle relative to the optical axis. In the illustrated embodiment, a direction of the reflected light at ninety degrees to the optical axis of fiber core 12 will be realized when the tilt angle is a forty-five-degree angle to the optical axis. Reflected light in this direction will go through the cladding without generation of cladding modes confined by and propagated in the cladding. This is ensured by a forty five degrees tilt angle. For other tilt angles it can easily be tested experimentally or by simulation whether a tilt angle ensures this. In general terms, generation of cladding modes is avoided when the tilt angle is selected so that no total internal optical reflection occurs at the interface between cladding layer 16 and photo-acoustic conversion material 18. For example, the generation of such cladding modes can be avoided by using tilt angles in a range around forty five degrees, e.g. between thirty five and sixty five degrees.

In an embodiment, fiber core 12 and cladding layer 16 may be part of a polarization maintaining single mode fiber, so that polarization dependence of the reflection by tilted FBGs 14 cannot result in variation of optical power output due to polarization changes along fiber core 12 .

Although figure 1 is used to describe a preferred embodiment of the optical fiber device with a single mode fiber core 12, i.e. a core that supports only a single mode of light at the wavelength that is reflected by the tilted FBG 14 and/or polarization variants of that mode, instead a multi-mode fiber core 12 may be used. When a multi-mode core is used, tilted FBG 14 may be configured to reflect optical power from a selected mode of the optical fiber core, preferably from its fundamental mode, and the coupling to the light source may be configured to couple light to the fiber core so that a major part of the optical power in the fiber core (e.g. ninety percent) is in the selected mode. When a multimode core is used, a few-mode optical fiber core is preferably used (e.g. supporting no more than two or three modes and their polarization variants). Use of a single mode fiber core has the advantage that the risk of instability of the reflected optical power due to bending, clamping etc of the fiber core can be reduced or avoided. The risk of such instability is reduced when the number of modes supported by the fiber core is reduced.

All tilted FBGs 14 in fiber core 12 preferably have the same tilt angle. Alternatively, different ones of the tilted FBGs 14 in fiber core 12 may have mutually different tilt angles, subject to the condition that the tilt angle does not give rise to cladding mode generation at the predetermined optical reflection wavelength of the tilted FBG.

In the illustrated embodiment, all tilted FBGs 14 are configured to reflect light in the same circumferential direction, and correspondingly bodies of photo-acoustic material 18 (or the layer of photoacoustic conversion material) may extend over a limited circumferential angle range on cladding layer 16 that includes the circumferential direction at which tilted FBGs 14 are configured to reflect the light. This provides for more effective coupling to a medium that is present only on one side of the an optical fiber device. In another embodiment, bodies of photo-acoustic material 18 may each extend over the entire circumference.

Figure 2a shows another embodiment, with bodies of photo-acoustic material 18 on different sides of optical fiber 20. As in the embodiment of figure 1, emitter arrangements 26a,b with tilted FBGs (not shown) are present at a sequence of positions along optical fiber 20. In this embodiment different ones of the tilted FBGs are configured to reflect light in different circumferential directions, with bodies of photo-acoustic material on cladding layer 16 in correspondingly different limited circumferential angle ranges that each include the circumferential direction at which the tilted FBG 14 at the position is configured to reflect the light. As shown by way of example, alternate FBGs 14 may be configured to reflect light in mutually opposite directions. More generally, successive FBGs 14 may be configured to reflect light at successive circumferential angles that increase by a fixed angle in the sequence of positions. Sub-sets of tilted FBGs may be distinguished, wherein each sub-set is associated with a different circumferential direction, the tilted FBGs in each sub-set being configured to reflect light in the circumferential direction associated with the sub-set.

In an embodiment, pairs of axially adjacent tilted FBGs may be present in fiber core 12, wherein the axially adjacent tilted FBGs in each pair are configured to reflect light in circumferential directions that are perpendicular to each other. This has the advantage that effects of optical polarization dependence of the reflection can be reduced or eliminated.

This may be used to reduce acoustic directionality effects due to use of the same reflection direction. When the device is embedded in a solid medium, this provides for coupling to specific types of acoustic modes. In a further embodiment, circumferential angles limited to sub-ranges of such angles may be used (e.g. circumferential angles only between zero and hundred eighty degrees). Of course, different circumferential positions can also result from torsion of the optical fiber 20, but the device may provide for emitter arrangements 26a,b in regularly different directions under torsion free conditions, and/or for emitter arrangements 26a,b in different directions where these emitter arrangements 26a,b are so close to each other that a maximal torsion force to which the optical fiber may be exposed is insufficient to cause such a direction difference.

Also, instead of using the tilted FBGs that are configured to reflect light in different circumferential directions each in combination with a body of photo-acoustic material in a limited circumferential angle ranges, such tilted FBGs may be used each in combination with a body of photo-acoustic material that extends over the entire circumference of optical fiber 20. This may be used to reduce acoustic directionality effects.

In use, a pulse of laser light with a wavelength at which tilted FBGs 14 reflect light is transmitted through fiber core 12. FBGs 14 reflect a part of the optical power of the light at their position each to the body of photo-acoustic material 18 at their position. The bodies of photo-acoustic material 18 absorb this part of the optical power of the light and convert it into vibrations which gives rise to acoustic waves propagating in the surrounding medium. The frequency spectrum of the vibrations generally depends on the size and shape and the material properties (e.g. stiffness) of the body of photo-acoustic material (or of a larger body that comprises the body of photo-acoustic material). Typically the spectrum mainly lies in the ultrasound frequency range, e.g. at frequencies above 100kHz, which gives rise to ultrasound waves propagating in the surrounding medium.

In an embodiment, all bodies may be configured to emit the same spectrum of acoustic emission. In another embodiment, at least two of the bodies, e.g. bodies at adjacent ones of the positions, may be configured to emit mutually different acoustic spectra (e.g. by having different sizes, shapes and/or material composition). Thus, the total emitted acoustic spectrum may be adapted, e.g. by making the total emitted spectrum wider than the spectrum emitted with a single body. For example, the bodies at the different positions may be divided into a plurality of similar blocks of bodies, wherein each block contains bodies configured to produce the same set of acoustic spectra. Because coupling to and from cladding modes is avoided, the total acoustic spectrum does not depend on cladding effects.

Use of FBGs that produce reflected light traveling in the direction perpendicular to the optical axis of fiber core 12 has the advantage that it substantially prevents that reflected light from tilted FBGs 14 travels through cladding layer 16 to bodies of photo-acoustic material 18 at the positions of other tilted FBGs 14. The fact that FBGs 14 transmit a part of the optical power of the light in core fiber 12 makes it possible to reflect parts of the optical power from the same optical pulse at all of tilted FBGs 14.

It should be appreciated that at least part of this advantage can be achieved also if the reflected light is not directed perfectly perpendicular to the optical axis of fiber core 12. It suffices that the angle between the direction of the reflected light and the direction perpendicular to the optical axis of fiber core 12 is smaller than the angle at which cladding modes can be excited, and preferably less than half or a tenth of that angle. If the angle is not zero, bodies of photo-acoustic material 18 may be correspondingly displaced from the position of the tilted FBG 14 to receive reflected light, or may be at that position and have a length along the direction of the optical axis of fiber core 12 to receive the reflected light.

The advantages of avoiding that the cladding captures cladding modes are firstly that sensitivity of the cladding mode optical power to the shape of the part of the optical fiber between the tilted FBG and the photo-acoustic material and energy redistribution among the cladding modes due to mode mixing along the fiber, and uncertainty in the strength of the acoustic emission are avoided. Secondly, there is no need to make the refractive index of the photo-acoustic material higher than that of the cladding or to remove the cladding locally or to take measures to enable interaction between the photo-acoustic material and the cladding mode in order to tap the optical power of the cladding modes from the cladding.

This makes it possible to maintain the integrity and robustness of the optical fiber.

In an embodiment the tilted FBGs 14 are identical, so that each transmits the same fraction of the optical power of light in fiber core 12 at its position, the optical power of the parts of the light reflected to bodies of photo-acoustic material 18 decreasing with position along fiber core 12.

In another embodiment, tilted FBGs 14 are configured to reflect different fractions of optical power, to equalize the reflected optical power as a function of position in the sequence of tilted FBGs 14. Each tilted FBG can be represented by an index "n" in the sequence, starting with n=0. The fraction of optical power from core fiber at the position of the tilted FBG 14 that is reflected by that tilted FBG 14 at the predetermined optical wavelength is denoted by f(n), so that the fraction of transmitted optical power is (1-f(n)). Neglecting optical damping along the fiber between the tilted FBGs, the reflected intensities can be equalized by using tilted FBGs 14 with f(n)=1/(N-n), where N is the number of tilted FBG 14 from which optical power is reflected (n smaller than N). N may be equal to ten or a smaller integer for example. In an embodiment, the tip of fiber core may replace the Nth tilted FBG 14 (with index n=N-1).

When the photo-acoustic conversion efficiency of bodies of photo-acoustic material 18 along the sequence are the same, this results in equal acoustic amplitude and substantially equal phase acoustic emission from all bodies of photo-acoustic material 18. Of course, when the photo-acoustic conversion efficiencies vary, different fractions f(n) may be used to obtain equal acoustic amplitudes.

The optical fiber device may be used as an ultrasound emitter array for direction dependent ultrasound emission, with core fiber 12 extending along a straight line, a circle or another curve, for example. When used with such an array, equalization of the ultrasound amplitude at the different bodies of photo-acoustic material 18 can be used to improve directivity. In embodiments wherein the directivity is not important, equalization can be used to improve a signal to noise ratio of measurements that rely on ultrasound transmission from bodies of photo-acoustic material 18 at the end of the sequence of tilted FBGs 14.

It should be noted that the optical power of the reflected part of the light from core fiber 12 at the sequence of positions of the tilted FBGs 14 need not be perfectly equal. As long as the reflected fraction increases with the position in the sequence, partial equalization can be achieved.

Various advantages can be obtained by using a single mode core fiber with emitter arrangements such as shown in figure 1, wherein each of the emitter arrangements comprises a tilted FBG configured to reflect part of the optical power of light in the core fiber at predetermined wavelength and the emitter arrangement comprises a body of photo-acoustic material on the cladding layer around the fiber core to convert the reflected light into acoustic vibrations.

Figure 2b shows an embodiment of the optical fiber device wherein such emitter arrangements (symbolized by rectangles 24a-c) at positions along a fiber 20 are used that reflect light from its core fiber at different predetermined wavelengths (fiber 20 comprises the fiber core and the cladding layer, but these are not separately indicated). Groups of emitter arrangements 24a-c at different subsequences of positions may be distinguished, each group being associated with a different optical wavelength, the tilted FBGs of the emitter arrangements within each group reflecting light selectively at the optical wavelength associated with the group.

This makes it possible to generate acoustic emission independently using the different groups by transmitting pulses of laser light with the wavelengths of the different groups. The relative timing of such pulses may be used to control relative phase delays between the acoustic emission generated using the different groups. When the optical fiber device is used as an ultrasound emitter array for direction dependent ultrasound emission, such phase delays may be used to adapt the directional emission pattern. Emitter arrangements from the different groups may need to be no more than half an ultrasound wavelength apart for this purpose 24a-c, e.g. less than fifteen millimeter apart (assuming an acoustical frequency of 100 kHz and a sound speed of 3000 m/s in the medium), dependent on the average ultrasound wavelength and cross-coupling between adjacent emitter arrangements should preferably be avoided. Use of emitter arrangements wherein titled FBGs reflect light from the fiber core in a direction perpendicular to the fiber core to bodies of photo-acoustic material may help to reduce or prevent such cross-coupling.

In other embodiments, the positions of the emitter arrangements from different groups may lie in separate sections of core fiber 12, or subgroups from different groups may be interleaved.

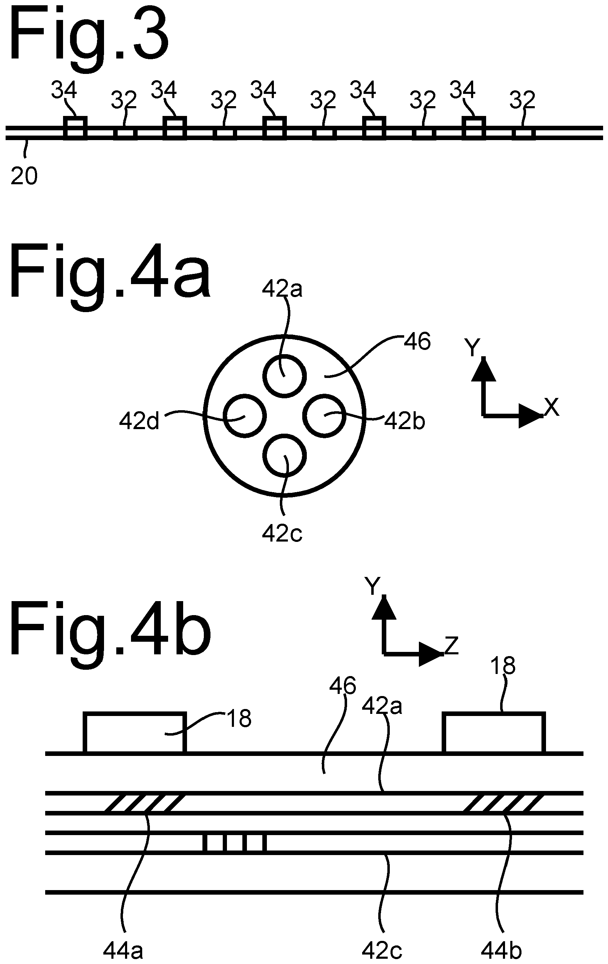

Figure 3 shows an embodiment of the optical fiber device wherein, in addition to emitter arrangements 34 as described before, not-tilted FBGs 32 have been added in fiber 20, which operate at a wavelength that differs from the wavelength used for the emitter arrangements 34. Standard non-tilted FBG may be used that operate in reflection. The not-tilted FBGs 32 may be used to detect acoustic waves that have been reflected back to the optical fiber device via an external medium and/or transmitted outside the optical fiber device. When operated in reflection, not-tilted FBGs 32 reflect light at the operating wavelength back along fiber core 12 (i.e. not-tilted FBGs 32 may comprise modulation of the refractive index in core fiber 12, the modulation pattern having a gradient direction along the optical axis of core fiber 12). Alternatively phase-shifted FBG's that operate in transmission can be used.

Corresponding bodies of photo-acoustic material are not needed at the positions of not-tilted FBGs 32. Use of the emitter arrangements 34 reduces the risk of cross coupling with not-tilted FBGs 32. In an embodiment, tilted FBGs and non-tilted FBGs are located alternately along the optical axis in the same fiber core. This makes it possible to perform separate detection close to each tilted FBG using a single fiber. More generally, in an embodiment, groups of one or more tilted FBGs and groups of one or more non-tilted FBGs may be located alternately along the optical axis in the fiber core.

Although embodiments have been described wherein a single fiber core is present in the fiber, it should be noted that alternatively a multi-core fiber may be used, surrounded by the same cladding layer.

Fig.4a, b illustrate such an embodiment. Herein the optical fiber device comprises a multicore fiber comprising a plurality of fiber cores 42a-d surrounded by a cladding layer 46. All fiber cores 42a-d may be single mode fiber cores. In the illustrated embodiment, tilted FBGs 44a,b are provided only in one of the fiber cores 42a, which is a single mode fiber core, with bodies of photo-acoustic material 18 on the cladding layer 46 that surrounds all fiber cores 42a-d. This makes it possible to realize additional functionality. In another embodiment, few mode fiber cores (e.g. fiber cores that support no more than two or three optical modes may be used. Preferably the tilted FBGs in the fiber core with tilted FBGs are configured to reflect light in the circumferential direction to the nearest circumferential part of the surface of cladding layer 46. By way of example a not-tilted FBG is shown in another fiber core 42c, which facilitates separate emission and detection. Instead of discrete bodies of photo-acoustic material a continuous layer of photo-acoustic conversion material on the cladding layer may be used.

In another example, more than one of the fiber cores 42a-d may comprise tilted FBGs, with corresponding bodies of photo-acoustic material on cladding layer 46, configured to be used as described for a single fiber core in the preceding. This makes it possible to supply light pulses independently to tilted FBGs in different fiber cores. Preferably the tilted FBGs in each fiber core are configured to reflect light in the circumferential direction to the nearest circumferential part of the surface of cladding layer 46. The bodies of photo-acoustic material at the position of these tilted FBGs extend over this circumferential direction on the surface of the cladding layer.

## Claims

1. An optical fiber device comprising
- a fiber core,
- a cladding layer around the fiber core;
- a plurality of tilted fiber Bragg gratings, FBGs, in the fiber core at a sequence of positions along the optical axis of the fiber core, all of the tilted FBGs, except at most the tilted FBG at the last position in the sequence, being configured to reflect and transmit respective non zero fractions of the optical power of light with a predetermined optical reflection wavelength defined by the tilted FBG from the fiber core at the position of the tilted FBG, each of the tilted FBGs having a tilt angle in an angle range wherein the tilted FBG reflects light from the fiber core perpendicularly to the fiber core or with a deviation from perpendicular reflection at which the reflected light does not give rise to cladding mode generation at the predetermined optical reflection wavelength of the tilted FBG;
- photo-acoustic conversion material on the cladding layer at least in areas where light reflected by the tilted FBGs at said positions emerges from the cladding layer, the cladding layer extending continuously at said areas.

2. An optical fiber device according to claim 1, wherein the reflection ratios of the fractions of the tilted FBGs in the plurality are configured to increase with position of the titled FBG along the sequence.

3. An optical fiber device according to claim 2, wherein the reflection ratios of the fractions of the tilted FBGs are configured so that the optical power of the light that is reflected from the tilted FBGs in the plurality is independent of their position in the sequence.

4. An optical fiber device according to any one of the preceding claims, wherein the tilted FBGs in the plurality of tilted FBGs all define the same predetermined optical reflection wavelength.

5. An optical fiber device according to any of claims 1-3, wherein the sequence of positions comprises a plurality of different subsequences of the positions, each subsequence associated with a respective different optical reflection wavelength, the predetermined optical reflection wavelength defined by the tilted FBGs at the positions in the subsequence equaling the optical reflection wavelength associated with the subsequence.

6. An optical fiber device according to claim 5, wherein successive positions in the sequence of positions are alternatingly part of different ones of the subsequences.

7. An optical fiber device according to claim 5, wherein the subsequences are groups of successive positions from the sequence.

8. An optical fiber device according to claim 1-3, wherein each tilted FBG in the plurality of tilted FBGs defines a respective different predetermined optical reflection wavelength.

9. An optical fiber device according to any of the preceding claims, wherein the tilted FBGs of the plurality comprises tilted FBGs that are directed to reflect the fraction of light in different circumferential directions from the fiber core.

10. An optical fiber device according to any of the preceding claims, wherein the tilted FBGs of the plurality comprise pairs of axially adjacent tilted FBGs in the fiber core, wherein the axially adjacent tilted FBGs in each pair are configured to reflect light in circumferential directions that are perpendicular to each other.

11. An optical fiber device according to claim 9 or 10, wherein the photo-acoustic conversion material on the cladding layer is present in the form of discrete bodies of photo-acoustic conversion material that receive light reflected in different directions from the tilted FBGs and lie in correspondingly different circumferential angle ranges.

12. An optical fiber device according to claims 9-11, wherein the tilted FBGs of the plurality comprises sub-sets of tilted FBGs, wherein each sub-set is associated with a different circumferential direction from the fiber core, the tilted FBGs in each subset being configured to reflect light in the circumferential direction associated with the sub-set.

13. An optical fiber device according to any of the preceding claims, wherein the photo-acoustic conversion material on the cladding layer at least partly has the form of a continuous layer of photo-acoustic conversion material surrounding the cladding layer, covering a plurality of locations on the cladding layer where light reflected by the tilted FBGs at said positions emerges from the cladding layer.

14. An optical fiber device according to any of the preceding claims, wherein the photo-acoustic conversion material on the cladding layer at least partly has the form of discrete bodies of photo-acoustic conversion material located where light reflected by the tilted FBGs at said positions emerges from the cladding layer.

15. An optical fiber device according to any of the preceding claims, comprising a volume of photo-acoustic conversion material, the fiber core and the cladding layer around the fiber core being embedded in said volume.

16. An optical fiber device according to any of the preceding claims, wherein the optical fiber device is a multi-core fiber, comprising the fiber core and at least one further fiber core embedded in cladding material that includes the cladding layer, the cladding layer surrounding the fiber core and the at least one further fiber core, wherein not-tilted FBGs are provided in the further fiber core and/or the further fiber core comprises further tilted FBGs, with the photo-acoustic conversion material on the cladding layer at least where light reflected by the tilted FBGs in the further fiber core emerges from the cladding layer.

17. An optical fiber device according to any of the preceding claims, wherein at least two of the bodies of photo-acoustic conversion material at different ones of the positions are configured to emit mutually different acoustic spectra.

18. An optical fiber device according to any of the preceding claims, further comprising not-tilted FBGs in the fiber core.

19. A method of emitting ultrasound, comprising transmitting an optical pulse through the fiber core and/or multiple cores of the optical fiber of any one of claims 1-17, at the predetermined optical reflection wavelength defined by at least one of the tilted FBGs.
